# EUROPÄISCHE PATENTSCHRIFT

(11) **EP 0 560 781 B1**
(45) Veröffentlichungstag und Bekanntmachung des Hinweises auf die Patenterteilung: **19.10.1994**
(21) Anmeldenummer: 91918139.6
(22) Anmeldetag: 15.10.1991
(51) Int. Cl.: B23K 9/20

(54) **VERFAHREN ZUM BOLZENSCHWEISSEN UND VORRICHTUNG ZUR DURCHFÜHRUNG DES VERFAHRENS**
STUD-WELDING PROCESS AND DEVICE FOR CARRYING OUT THE PROCESS
PROCEDE ET DISPOSITIF DE SOUDAGE A L'ARC AVEC PERCUSSION

(30) Priorität: 17.10.1990 CH 3325/90
(43) Veröffentlichungstag der Anmeldung: 22.09.1993
(73) Patentinhaber: Schneegans, Thomas H., D-79576 Weil am Rhein (DE)
(72) Erfinder: Schneegans, Thomas H., D-79576 Weil am Rhein (DE)
(74) Vertreter: Büchel, Kurt F., Dr.
(86) Internationale Anmeldenummer: EP9101950
(87) Internationale Veröffentlichungsnummer: WO9206814

(56) Entgegenhaltungen:
- US-A- 4 988 842
- PATENT ABSTRACTS OF JAPAN, vol. 5, no. 166 (M-93)(838) 23 October 1981, & JP-A-56 091 983 (NIPPON DORAIBUITSUTO K.K.) 25 July 1981.

## Beschreibung

Die Erfindung bezieht sich auf ein Verfahren nach dem Oberbegriff des Anspruches 1.

Bolzenschweissverfahren sind im Prinzip in zweierlei Ausführungsformen bekannt. Bei der einen arbeitet man mit einer Spitze, die gleichzeitig unter Strom gesetzt und von einer Kraft gegen den anzuschweissenden Teil hin beaufschlagt wird (Spitzzündungsverfahren). Hiebei werden grosse Ströme auf- und dann über die Spitze entladen. Infolge der kurzen zur Verfügung stehenden Zeit während der Entladung ist es nicht möglich, den Bolzen etwa noch weiter gegen den anzuschweissenden Teil hin zu beschleunigen und tiefer in die Schmelze einzutauchen, so dass bei einem Bolzendurchmesser über 8 mm dieses Verfahren nicht anwendbar ist, wie aus Fachbüchern (vgl. Bettermann "Bolzenschweisstechnik", Seite 4) bekannt ist.

So beschreibt beispielsweise die JP-A-56-91 983 eine Vorrichtung zum Bolzenschweissen, bei der eine Führungsvorrichtung das senkrechte Führen einer Schweisspistole in bezug auf eine Fläche gewährleistet, auf die der Bolzen aufgeschweisst wird. Der Bolzen selbst ist in einen Führungsblock eingeschoben, der seinerseits über ihm zugeordnete Federn in Achsrichtung der Schweisspistole verschiebbar ist. Während des Schweissvorgangs wird der Bolzen mittels der Schweisspistole gegen die Fläche gedrückt. Der Führungsblock ist dazu vorgesehen, dass die Schweisspistole während des Schweissvorgangs senkrecht in bezug auf die Fläche positioniert bleibt.

Zwar lassen sich mit der Hubzündungstechnik auch grössere Durchmesser verschweissen, doch verlangt diese Verfahrensart eine Schutzgasatmosphäre, der Energiebedarf ist höher, die Schweisszeit länger und die Tendenz zum Durchbrennen des Bolzens am anzuschweissenden Teil zeigt sich in verstärktem Masse, so dass beim Anschweissen eines solchen Bolzens an einer dünnen Platte immer zumindest sehr starke Schweissverfärbungen an der Unterseite der Platte zurückbleiben. Dies ist aber in vielen Fällen unerwünscht.

Daraus ergibt sich, dass es bisher nicht möglich war, Bolzendurchmesser über 8 mm
- sauber,
- ohne Schutzgas, und
- in kurzer Zeit
anzuschweissen, woraus sich auch die Aufgabenstellung zur vorliegenden Erfindung ergibt, die insbesondere das Anschweissen der Angel an einem Kellenblatt ermöglichen soll, bei welcher Anwendung diese Anforderungen in extremem Masse bestehen.

Zur Lösung dieser Aufgabe wurden umfangreiche Versuche durchgeführt, die in einem ersten, zur Erfindung führenden Schritt die Erkenntnis brachte, dass eine wesentliche bisher zu den erwähnten Schwierigkeiten führende Erscheinung die Tatsache ist, dass der Bolzen beim Auslösen des Schweissstromes die Tendenz hat, auf dem flüssig gewordenen Ende gewissermassen "wegzuschwimmen". Diese Tendenz kann durch die bisher, ausschliesslich axial angreifenden Andruckeinrichtungen nicht aufgefangen werden, d.h. die Untersuchungen führten zu der Erkenntnis, dass es sich hier nicht zuletzt um ein Zentrierungsproblem während des, unter Umständen sehr kurzzeitigen (das Spitzzündungsverfahren arbeitet innerhalb von Millisekunden), Schweissvorganges handelt.

Auf dieser Erkenntnis aufbauend, besteht der zweite zur Erfindung führende Schritt in den Massnahmen nach Anspruch 1. Dadurch, dass nun der Andruck mit parallel und winkelsymmetrisch angeordneten Kraftkomponenten erfolgt, ist eine Dezentrierung weniger leicht möglich, wobei allfällige, durch die Geometrie des Bolzens oder der Vorrichtung gegebene Dezentrierungstendenzen vorzugsweise durch die Merkmale des Anspruches 2 ausgeglichen werden können. Hiezu bedarf es dann bloss einer Probeschweissung, um die nötige Einstellung vornehmen zu können, wobei unter "gesonderter" Einstellung eine solche verstanden werden soll, bei der eine Einstellung des einen Druckes nicht notwendigerweise eine gleich grosse Verstellung des anderen Druckes zur Folge hat.

Wiewohl sich aus den obigen Erläuterungen ergibt, dass die Erfindung prinzipiell auf alle Ausführungsformen des Bolzenschweissverfahrens anwendbar ist, wird die der Erfindung zugrunde liegende Aufgabe am besten durch die Anwendung gemäss Anspruch 3 gelöst.

Eine Anwendung des erfindungsgemässen Verfahrens, bei dem die Vorteile in besonders hohem Masse ausgenützt werden, ist durch die zwingenden Merkmale des Anspruches 4 beschrieben. In diesem Falle ist es aber bevorzugt, wenn die Angel vor dem Schweissen gebogen wird, da dies einerseits leichter möglich ist, anderseits auf diese Weise die Einwirkung hoher Kräfte auf die Schweissstelle vermieden wird.

Das oben angesprochene Zentrierproblem wird noch besser durch die Merkmale des Anspruches 5 beherrscht.

Obwohl das erfindungsgemässe Verfahren Qualitätsvorteile für die Verschweissung aller Bolzenstärken bringt, ist es mit besonderem Vorteil auf Bolzen grösserer Querschnittsstärke (d.h. bei rundem Querschnitt: Durchmesser) als 8 mm anwendbar, bei welchen die Fachwelt bisher der Ansicht war, hiefür sei das Bolzenschweissverfahren prinzipiell ungeeignet.

Zwar hat es sich herausgestellt, dass der Andruck in der in Anspruch 1 bezeichneten Weise durchaus ausreichend ist, doch ergibt sich durcn nie Merkmale des Anspruches 7 noch eine weitere Verbesserung.

Eine erfindungsgemässe Vorrichtung kennzeichnet sich durcn nie Merkmale des Anspruches 8.

Vorteilhafte Weiterbildungen der erfindungsgemässen Vorrichtung sind in den kennzeichnenden Merkmalen der Ansprüche 9 bis 11 beschrieben.

Da die den Bolzen umfassende Halterung ausschliesslich an wenigstens einer der Andruckeinrichtungen gehaltert ist, die Öffnungs- und Schliesseinrichtungen für die Formhälften der Halterung jedoch keine starre Verbindung zum Gehäuse aufweisen, wird die Führung des Bolzens während des Schweissvorgangs ausschliesslich durch die Andruckeinrichtungen bestimmt. So geschieht das Öffnen - und gegebenenfalls auch das Schliessen - der Formhälften über geeignet gewählte Kupplungsglieder, die die Abwärtsbewegung des Bolzens in seiner Halterung nicht behindern.

Weitere Einzelheiten der Erfindung ergeben sich an Hand der nachfolgenden Beschreibung von in der Zeichnung schematisch dargestellten Ausführungsbeispielen. Es zeigen:
- Fig.1: eine erfindungsgemässes Ausführungsbeispiel, zu dem
- Fig.2: die Form bzw. die Bolzenhalterung in explodierter Perspektivansicht veranschaulicht; und
- Fig.3: eine Variante zu der in Fig.1 dargestellten Schaltung.

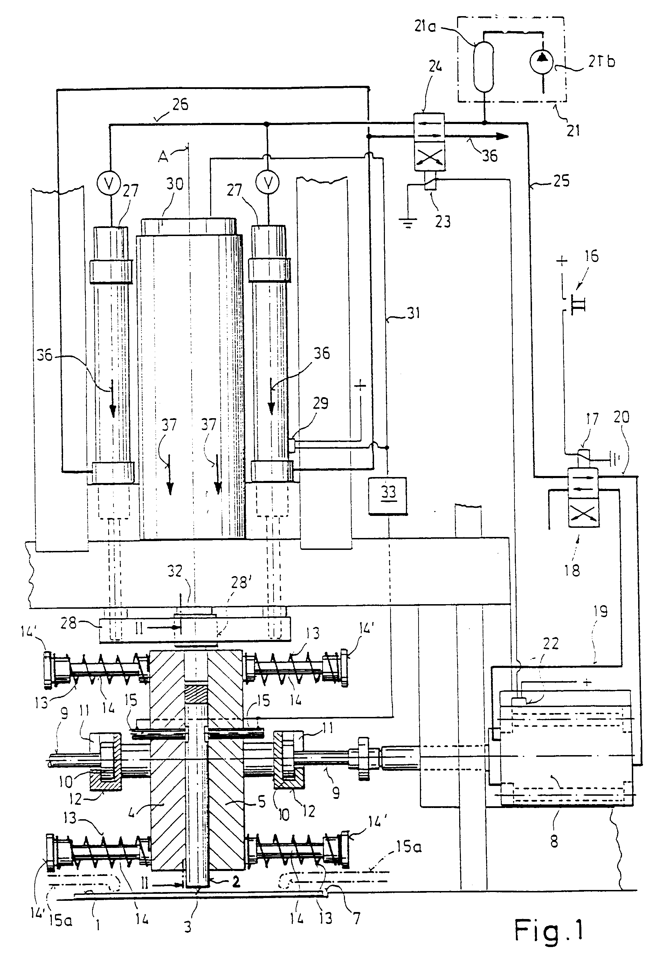

Gemäss Fig.1 sollen ein Kellenblatt 1 und eine Angel 2 durch Bolzenschweissen miteinander verbunden werden. Hiezu besitzt die Angel 2 eine dem Kellenblatt 2 zugekehrte Spitze 3. Das Kellenblatt 1 ist mit wenigstens einer, vorzugsweise zwei, Masseelektrode(n) 15a verbunden, die hier lediglich strichpunktiert angedeutet sind. Diese Masseelektroden 15a können ortsfest angeordnet sein und beim Transport aufeinanderfolgender Kellenblätter 1 entlang einer senkrecht zur Zeichenebene verlaufenden Bahn 7 über deren Oberfläche schleifen. Während des Schweissvorgangs werden die Masseelektroden 15a unter Druck gesetzt.

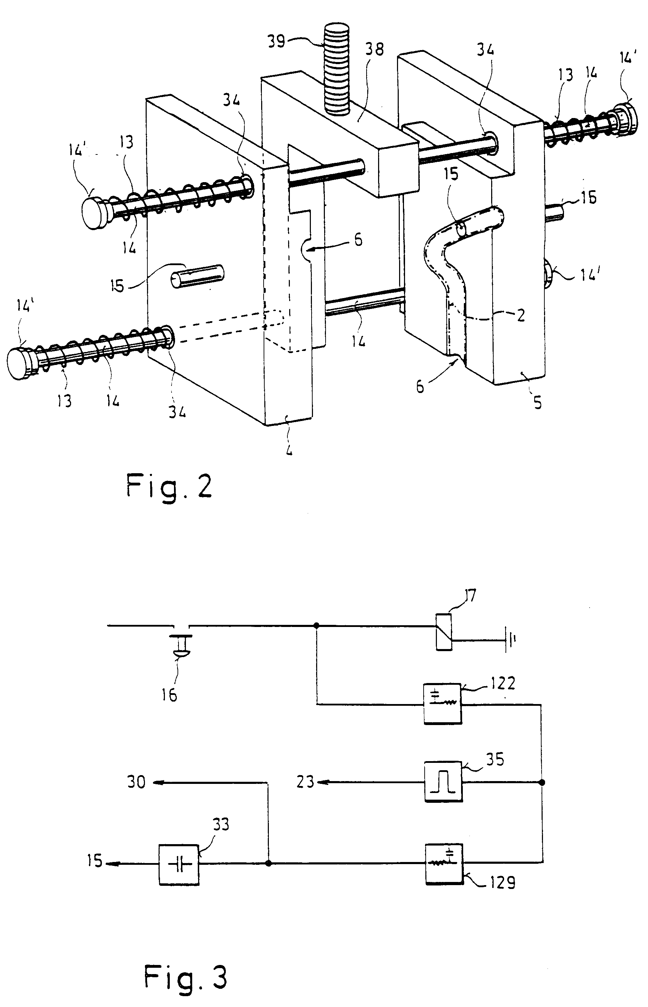

Um die - wie besonders aus Fig.2 ersichtlich - bereits fertig gebogene Angel 2 in ihrer Position sicher festzuhalten, sind zwei die Angel 2 in einer Vertiefung bzw. Aushöhlung 6 umschliessende Formhälften 4,5 vorgesehen. Die Aushöhlung 6 kann nur in einer der Formhälften 4 oder 5 vorgesehen sein, ist aber vorzugsweise je etwa zur Hälfte in der einen bzw. der anderen Formhälfte 4,5 angeordnet, in welchem Falle die Angel 2 durch eine symmetrische Bewegung der beiden Formhälften 4,5 aus diesen freigegeben werden kann. Hiezu sind die beiden Formhälften 4,5 relativ zueinander aus der dargestellten Schliessstellung in eine Offenstellung bewegbar. Prinzipiell könnte dies auch so erfolgen, dass die eine Formhälfte starr und nur die andere bewegbar ist, doch ist es günstiger, wenn beide Formhälften 4,5 auseinander bzw. aufeinander zu bewegbar sind, da dies die Freigabe der Angel 2 erleichtert.

Zum leichteren Einsetzen und Herausnehmen der Angel 2 aus den Formhälften 4,5 muss ein gewisses Spiel in der Aushöhlung 6 vorgesehen sein. Dadurch kann die Angel 2 sich beim Aufsetzen auf das Kellenblatt 1 etwas bewegen, weshalb die Form der Aushöhlung 6 derart zu wählen ist, dass die Angel 2 im auf das Kellenblatt 1 aufgesetzten Zustande die jeweils gewünschte Lage mit Sicherheit einnimmt. Das erfindungsgemässe Verfahren wird bevorzugt bei Bolzen bzw. Angeln 2 grösseren Durchmessers bzw. grösserer Querschnittsstärke (falls der Querschnitt von einer runden Form abweicht) angewandt, so dass auch die Aushöhlung 6 (gerechnet für beide Formhälften 4,5) vorzugsweise eine grössere Querschnittsstärke als 8 mm aufweisen wird.

In Fig.1 ist lediglich die Art der Bewegbarkeit der Formhälfte 5 gezeigt, die der Formhälfte 4 lediglich angedeutet, doch versteht es sich, dass die Bewegung der Formhälfte 4 auf dieselbe Art erfolgt, wie die der Formhälfte 5. Die Bewegung der Formhälfte 5 wird dabei von einem Zylinderaggregat 8 gesteuert, und es ist klar, dass der Formhälfte 4 bei einer bevorzugten Ausführung ein ebensolches Aggregat zugeordnet ist. Gegebenenfalls kann aber auch nur ein einziges Aggregat 8 vorgesehen sein, wobei die Übertragung der von ihm gesteuerten Bewegung auf die Formhälfte 4 über ein Bewegungsumkehrgetriebe an sich bekannter Art erfolgt.

Eine Kolbenstange 9 ragt aus dem Zylinderaggregat 8 und endet in einem Haken oder einer Scheibe 10, die in einen Schlitz 11 eines Kupplungsteiles 12, der Höhe nach gleitbar, eingreift. Diese Verbindung ermöglicht eine ungehinderte Vertikalbewegung der Angel 2 samt den Formhälften 4,5 gegen das Kellenblatt 1. Die Bewegung der Formhälfte 5 durch das Zylinderaggregat 8 hingegen erfolgt durch Mitnahme des mit der Formhälfte 5 verbundenen Kupplungsteiles 10 entgegen der Wirkung von Druckfedern 13, die an stiftförmigen Druckfederhaltern 14 angeordnet sind. Wie Fig. 2 zeigt, ist jeder Druckfederhalter 14 (im einfachsten Falle könnte auch nur ein einziger Druckfederhalter einer Formhälfte zugeordnet sein) jeweils in Bohrungen 34 der Formhälften 4 und 5 gesteckt, wobei an den Enden der Druckfederhalter 14 Kappen 14' aufgeschraubt sind, an denen sich an beiden Enden dieser Stifte 14 Druckfedern 13 mit einem ihrer Enden abstützen, deren anderes Ende gegen die zugehörige Formhälfte 5 bzw. 4 drückt. An wenigstens eine der Formhälften 4,5, bevorzugt aber zur Erzielung eines symmetrischen Stromflusses an beiden, ist eine Elektrode 15 angeschlossen.

Mit dem Schliessen eines Auslöseschalters 16 wird über einen Magneten 17 ein Ventil 18 in die aus Fig.1 ersichtliche Lage gebracht, in der eine Leitung 19 mit dem Abfluss, dagegen eine Leitung 20 mit einer, zweckmässig pneumatischen, Druckquelle 21 verbunden ist. Diese Druckquelle 21 umfasst vorteilhaft nicht nur eine entsprechende Druckmediumpumpe 21b, sondern auch einen Drucktank oder Akkumulator 21a, durch den - auch bei relativ klein gehaltener Pumpe 21b - rasch eine entsprechende Menge an Druckmedium, insbesondere Druckluft, bereitgestellt werden kann.

Wenn die Leitung 20 mit der Druckquelle 21 verbunden ist, so gelangen die Formhälften 4,5 in die dargestellte Schliesslage. Dies könnte an sich zwangsläufig durch das Aggregat 8 selbst erfolgen, doch wird im vorliegenden Falle die eigentliche Schliesskraft von den Druckfedern 13 aufgebracht, denen der Kolben des Aggregates 8 nur nachgeführt wird, so dass die Schliesskraft stets genau definiet ist. Denkbar wäre es auch, die Leitung 20 wegzulassen und beim Ablassen der Luft (oder eines anderen Fluids) über die Leitung 19 lediglich die Druckfedern 13 wirken zu lassen.

Sobald die Formhälften 4,5 in die dargestellte Schliesslage gelangen, kann der nächste Schritt automatisch durch einen entsprechenden Geber ausgelöst werden. Hiezu ist in diesem Beispiel ein Reedrelais 22 am Zylinderaggregat 8 vorgesehen, das durch den Kolben dieses Aggregates 8 betätigt wird. Damit wird ein Magnet 23 unter Strom gesetzt, der ein Ventil 24 in die gezeigte Lage bringt. Damit wird die Zufuhrleitung 25 nun auch mit einer Leitung 26 verbunden, die wenigstens zwei, winkelsymmetrisch zu der durch die Vorrichtung verlaufende Achse A angeordnete Pneumatikzylinder 27 unter Druck setzt. Prinzipiell könnte der fluidische Druck auch mittels eines Hydraulikmediums erfolgen, doch ist eine elastische Druckausübung durch Luftdruck günstiger. Es ist klar, dass aber dann günstigerweise auch das Aggregat 8 von derselben Druckquelle 21 versorgt wird, obwohl auch eine gesonderte Druckquelle verwendet werden könnte.

Durch die Pneumatikzylinder 27 wird nun vorab ein Druck über eine Druckscheibe 28 auf die Formhälften 4,5 bzw. die Angel 2, die bei Kellen üblicherweise von nicht unbeträchtlichem und jedenfalls die für ein Bolzenschweissverfahren übliche Dicke von 8 mm übersteigendem Durchmesser ist, ausgeübt, der die Angel 2 noch vor dem Zünden des Schweissstromes wohl zentriert gegen das anzuschweissende Kellenblatt 1 drückt. Die Zentrierung ergibt sich dabei einerseits dadurch, dass die Druckscheibe 28 gewissermassen eine "Basis" darstellt, die die auf sie wirkenden Kraftkomponenten 36 der Zylinder 27 günstiger verteilt, als es bisher bei zentrischem Andruck der Fall war, und so einem "Abschwimmen" des Bolzens 2 auf der Schweissschmelze entgegenwirkt.

Zusätzlich ist es bevorzugt, wenn die Drücke 36 der beiden Pneumatikzylinder 27 unabhängig voneinander einstellbar sind. Zu diesem Zwecke ist in der Zuleitung 26 je ein Justierventil V vorgesehen, durch die der Druck in den Zylindern 27 eingestellt werden kann. Denkbar wäre alternativ, dass innerhalb der Zylinder 27 dem Pneumatikdruck entgegen wirkende Federn verstellbarer Federkraft angeordnet sind, wogegen der Pneumatikdruck an sich konstant ist. Jedenfalls sind verschiedenste Lösungen zur Justierung der Kraftkomponenten 36 denkbar.

Gegebenenfalls kann auch hier ein Reed-Relais 29 vorgesehen werden, um die unterste Stellung des den Zylindern 27 zugehörigen Kolbens abzufühlen, doch ist ja dessen Hub ziemlich klein (die Zylinder 27 brauchen nur zur Anpassung an verschiedene Formen- und Angelgrössen einen längeren Anpassungshub bewältigen können, soferne man nicht für alle Angelformen und - grössen gleich grosse Formhälften verwendet), weshalb die Auslösung des nächsten Schrittes über ein Zeitglied, an Stelle des Relais 29, bevorzugt ist, wie dies später an Hand der Fig.3 geschildert wird.

Mit der Betätigung des Reed-Relais 29 (oder eines anderen Gebers) wird ein, zweckmässig von einer herkömmlichen Federpistole 30 gebildetes, Beschleunigungsglied über eine Leitung 31 ausgelöst. diese Federpistole 30 drückt mit ihrer Feder, entsprechend den Vektoren 37, den Bolzen 2 bereits vor dem Verschweissen axial an, wobei damit allein bisher eine leicht Schrägstellung bzw. Dezentrierung des Bolzens 2 ermöglicht wurde, bzw. verhindert wurde, dass stärkere Bolzen (und auch längere) geschweisst werden konnten. Mit dem Auslösen über die Leitung 31 wird nun im Augenblicke der Schweissstromauslösung eine zusätzliche Kraft, die ebenfalls in Richtung der vektoren 37 wirkt, meist auf magnetischem Wege, aufgebracht, um die den Bolzen bildende Angel 2 gegen das Kellenblatt 1 zu beschleunigen bzw. zu drucken.

Die Übertragung dieser zusätzlichen Kräfte 37 kann auf verschiedenem Wege erfolgen. Es wäre denkbar, dass diese Kräfte (Federkraft + ausgelöste Magnethammerkraft) ebenfalls unmittelbar auf die Druckplatte 28 wirken, die sie auf die Formhälften 4,5 und die Angel 2 überträgt. Hier ist jedoch die Druckplatte 28 mit einer zentralen Öffnung 28' versehen, durch die die Federpistole 30 hindurchdringt und unmittelbar auf die Form 4,5 und die Angel 2 wirkt.

Zwischen den beiden Formhälften 4,5 ist ein Rahmen 38 angeordnet, durch den einerseits die Druckfederhalter 14 geführt sind und an dem andererseits eine Befestigungseinrichtung, beispielsweise in Form eines Schraubenschaftes 39, vorgesehen ist, mit dem die beiden Formhälften 4,5 in einer Fassung 32 befestigt werden können. Die beiden Formhälften 4,5 können somit entweder - wie in dem in Fig.1 dargestellten Fall - an der Federpistole 30, durch die Öffnung 28' der Druckplatte 28 reichend über die Fassung 32 gehaltert sein, oder auch direkt an der Druckplatte 28 befestigt werden, die dann keine Öffnung 28' aufweist.

Die Leitung 31 ist auch mit einer Stromquelle 33 verbunden, die u.a. einen Kondensator zur Bereitstellung einer entsprechenden Energiemenge enthält, der durch das aus der Leitung 31 kommende Signal (z.B. über ein Schaltrelais) entladen wird. Dabei ist die Schaltung derart ausgelegt, dass die Angel 2 ihren Impuls vom Magnethammer 30 dann erhält, wenn sich eine gewisse Schweissschmelze gebildet hat, d.h. die Zeitkonstanten des Schmelzens und des Auslösens des Magnethammers 30 bis zum Aufschlag an der Form 4,5 sind aufeinander abgestimmt.

Wenn die Zündung des Schweissstromes erfolgt ist, geschieht auch die Rückstellung der Vorrichtung, sei es, dass der Schalter 16 von Hand aus wieder frei gegeben wird, sei es dass der Schalter 16 als Zeitrelais ausgebildet ist und nach Ablauf einer vorbestimmten Zeit wieder in seine Offenstellung zurückkehrt, oder dass über die Leitung 31 ein verzögerter Rückstellbefehl erfolgt. Die Ventile 18 und 24 kehren dann aus den dargestellten Lagen in ihre Ausgangslage zurück, in der Zufuhr- und Abfuhrleitungen miteinander vertauscht sind. Sodann kann ein neuer Zyklus erfolgen.

Fig.2 zeigt strich-punktiert eine mögliche Ausführung einer Angel 2, die in eine halbe Aushöhlung 6 der Formhälfte 5 eingelegt ist (die andere halbe Aushöhlung 6 befindet sich in der Formhälfte 4). Ersichtlich ist auch die Anbringung der Elektroden 15, die gemäss Fig.1 an derselben Leitung hängen, gewünschtenfalls jedoch auch über gesonderte Leitungen mit Strom versorgbar sind. Die Angel 2 besitzt dabei bereits die gewünschte Biegung bzw. Abwinkelung, da ein Abbiegen nach dem Schweissen unerwünschte Beanspruchungen der Schweissstelle mit sich bringen könnte.

In Fig.3 sind Teile gleicher Funktion mit denselben Bezugszeichen versehen, bei leicht abweichender Funktion jedoch allenfalls unter Hinzufügung einer Hunderterziffer. Dabei versteht es sich, dass der Auslöseschalter 16 wieder nur als blosser Handschalter dargestellt ist, obwohl er, wie oben erläutert, verschieden ausgestaltet sein kann.

Nach Schliessen dieses Schalters 16 wird der Magnet 17 erregt, der (gemäss Fig.1) das Ventil 18 zur Steuerung des Aggregates 8 erregt. Ein paralleler Strompfad enthält ein erstes Verzögerungsglied 122, über das eine monostabile Kippstufe 35 angesteuert wird. Die Kippstufe 35 besitzt eine derartige Zeitkonstante, dass der Magnet 23 des Ventiles 24 (vgl. Fig. 1) für eine ausreichend lange Zeit zur Durchführung des Vorandruckes, der Beschleunigung des Magnethammers 30 und der Zündung des Schweissstromes erregt bleibt. Dann kehrt die monostabile Kippstufe 35 wieder in ihre Ausgangslage zurück, d.h. das Ventil 24 gelangt in eine Stellung, in der die Leitung 26 mit einer Ausströmleitung 36 verbunden ist und der jeweilige Kolben der Zylinder 27 nach oben fährt.

Über das Verzögerungsglied 122 wird nun aber auch ein weiteres Verzögerungsglied 129 angesteuert, das - nach Durchführung des Vorandruckes über die Zylinder 27 - den Magnethammer 30 ansteuert sowie die Stromquelle 33. Es wurde bereits erwähnt, dass diese Stromquelle 33 selbst ein Verzögerungsglied (mit sehr kurzer Zeitkonstante) aufweisen kann.

Aus diesen Erläuterungen ergibt sich, dass eigentlich auch die Sensoren 22 und 29 die Funktion von Zeitgliedern besitzen, wenn auch hier die Zeitkonstante nicht genau vorgegeben ist. Es versteht sich, dass Mischformen der in Fig.1 und der in Fig.3 gezeigten Steuerungen denkbar sind, wobei - wie schon gesagt - insbesondere der Sensor 29 zweckmässig durch das Zeitglied 129 ersetzt wird, jedoch an Stelle des Zeitgliedes 122 durchaus das Reed-Relais 22 (oder jeder andere für diesen Zweck geeignete Positionssensor) verwendet wird. Auch wäre ein geringerer oder höherer Grad an Automatisierung möglich, etwa indem die Angeln 2 aus einem Magazin vollautomatisch in die Formen 4,5 eingelegt werden und die Betätigung und Auslösung der übrigen Steuerteile entsprechend im Takt erfolgt, wobei die Kellenblätter 1 über einen Förderer schrittweise über die Bahn 7 (senkrecht zur Zeichenebene) geführt werden. Auch die Schrittfrequenz dieses Förderers könnte dann in ähnlicher Weise gesteuert werden, wie dies oben für die anderen Verfahrensschritte beschrieben wurde.

Zurückkehrend zu Fig.1 ist dort ersichtlich, dass die Kraftvektoren 36,37 der einerseits von den Zylindern 27, anderseits vom Magnethammer 30 ausgeübten Kräfte zueinander parallel sind. Dadurch wird auch die Unterbringung der Teile 27 und 30 erleichtert. Das Problem der gleichmässigen Verteilung der Kräfte ist durch die Druckplatte 28 gelöst, an der gewünschtenfalls auch mehr als zwei Zylinder 27 angreifen können, wie auch gewünschtenfalls mehrere Magnethämmer 30 angeordnet werden mögen, obwohl dies wieder zu Synchronisierungsschwierigkeiten führen mag, ja es hat sich gezeigt, dass der Magnethammer auch weggelassen werden kann.

Wenn im Rahmen dieser Erfindung davon die Rede ist, dass die Vorandruckeinrichtung 27 auf den Bolzen 2 drückt, so geschieht dies bei einer (bevorzugten) Ausführung gemäss Fig.1 nur indirekt, nämlich über die Formhälften 4,5. Im Prinzip wäre es möglich, statt der Formhälften 4,5 einen Greifer zur Halterung des Bolzens vorzusehen und die Vorandruckeinrichtung 27 bzw. die Andruckeinrichtung 30 direkt auf den Bolzen 2 wirken zu lassen, soferne hier allenfalls nicht noch die Ambossplatte 28 zwischengeschaltet ist. Dies kann etwa bei geraden Bolzen erfolgen, doch wird bei vorgebogenen Angeln die Verwendung der Formhälften 4,5 empfehlenswert sein.

Im Falle der Anwendung der Erfindung auf das Hubzündungsverfahren versteht es sich, dass entsprechende Einrichtungen zur Zufuhr von Schutzgas vorzusehen sind.

## Patentansprüche

1. Verfahren zum Bolzenschweißen, bei dem ein an eine Fläche (1) anzuschweißender Bolzen (2) gegen die Fläche (1) mit einer entlang seiner Achse (A) wirkenden Kraft beschleunigt wird, während ein Lichtbogen gezündet wird, worauf die Bolzenstirnfläche in ein durch Anschmelzen der Bolzenstirnfläche und der Fläche (1) entstandenes Schmelzbad eingetaucht wird, dadurch gekennzeichnet, daß der Bolzen (2) - wenigstens vor dem Beschleunigungsvorgang - über wenigstens zwei zur Bolzenachse (A) im wesentlichen parallele, und vorzugsweise winkelsymmetrisch dazu liegende, an wenigstens zwei Stellen außerhalb der Achse (A) angreifende Kräfte (36) bezüglich der Fläche (1) positioniert und an diese angedrückt wird, so daß der Bolzen (2) beim Eintauchen in das Schmelzbad nicht seitlich wegschwimmt.

2. Verfahren nach Anspruch 1, dadurch gekennzeichnet, daß die Größe der Kräfte (36) an den wenigstens zwei Stellen jeweils gesondert eingestellt wird.

3. Verfahren nach Anspruch 1 oder 2, dadurch gekennzeichnet, daß das Spitzenzündungsverfahren angewandt wird.

4. Verfahren nach einem der vorhergenden Ansprüche, dadurch gekennzeichnet, daß als Bolzen die Angel (2) einer zu fertigenden Kelle (1, 2) dient, der auf die Kellenfläche (1) aufzuschweißen ist, und daß vorzugsweise die Angel (2) noch vor dem Schweißen ihre Biegung erhält.

5. Verfahren nach einem der vorhergehenden Ansprüche, dadurch gekennzeichnet, daß der, insbesondere abweichend von einer geraden Form geformte, Bolzen (2) in einer ihn umgebenden Form (4, 5) festgehalten wird.

6. Verfahren nach einem der vorhergehenden Ansprüche, dadurch gekennzeichnet, daß als Bolzen ein solcher mit größerer Querschnittsstärke als 8 mm verwendet wird.

7. Verfahren nach einem der vorhergehenden Ansprüche, dadurch gekennzeichnet, daß vor oder gleichzeitig mit dem Andrücken des Bolzens (2) über zueinander parallele, ausseraxiale Kräfte (36) ein axialer Andruck (37) angewandt wird und/oder daß ein zu den parallelen Kräften (36) hinzutretender axialer Andruck (37) etwa im Augenblick der Auslösung des Schweißstromes ausgeübt wird.

8. Vorrichtung zur Durchführung des Bolzenschweißverfahrens nach einem der vorhergehenden Ansprüche, mit einer Schweißstromquelle (33), von der über einen Auslöseschalter (16 bzw. 29) Strom an einen auf eine Fläche (1) anzuschweißenden Bolzen (2) legbar ist, sowie mit einer Andruckeinrichtung zum Erzeugen einer auf den Bolzen (2) wirkenden Druckkraft vor dem Auslösen des Schweißstromes, und mit einem die Beschleunigung des Bolzens (2) im Augenblick des Auslösens des Schweißstroms gegen aie Fläche (1) bewirkenden Beschleunigungsglied (30) dadurch gekennzeichnet, daß die Andruckeinrichtung wenigstens zwei parallel zueinander eine Druckkraft (36) ausübende Druckglieder (27) umfaßt, welche Druckglieder (27) über eine Druckplatte (28) zur Belastung des Bolzens (2) verbunden sind, und daß eine Justiereinrichtung (V) zum Einstellen der Druckkraft (36) jedes Druckgliedes (27) vorgesehen ist.

9. Vorrichtung nach Anspruch 8, dadurch gekennzeichnet, daß das Beschleunigungsglied (30) als Magnethammer ausgebildet ist.

10. Vorrichtung nach Anspruch 8 oder 9, dadurch gekennzeichnet, daß wenigstens ein Druckglied (27) von einem fluidischen, insbesondere pneumatischen, mit einer Druckquelle (21) verbindbaren Kolben-Zylinder-Aggregat (27) gebildet ist, und daß vorzugsweise die Druckquelle (21) einen Drucktank, -akkumulator od.dgl. (21a) umfaßt.

11. Vorrichtung nach einem der Ansprüche 8 bis 10, dadurch gekennzeichnet, daß eine wenigstens zweiteilige, den Bolzen (2) mit einer ihm entsprechenden Aushöhlung (6) umfassende, mit wenigstens einer Schweißelextrode (15) verbundene, ausschließlich an einer der Andruckeinrichtungen gehalterten Form (4, 5) als Halterung für den Bolzen (2) vorgesehen ist, und daß wenigstens eines der folgenden Merkmale verwirklicht ist:
a) es ist eine die Teile der Form (4, 5) mit vorbestimmter Kraft in ihrer den Bolzen (2) umfassenden Schließstellung beaufschlagende Belastungseinrichtung (13) vorgesehen, die vorzugsweise zumindest eine Feder, insbesondere eine Druckfeder (13), aufweist, wobei zweckmäßig ein, insbesondere stiftförmiger, Druckfederhalter (14) durch die Formteile (4 bzw. 5) hindurchläuft und jeweils Federn (13) zwischen diesen und seinem jeweiligen Ende eingespannt sind:
b) es sind wenigstens zwei, jeweils mit einem Formteil (4, 5) verbundenen Elektroden (15) vorgesehen;
c) es ist mindestens ein Linearantrieb, insbesondere mit einem Zylinder-Kolben-Aggregat (8), zum Öffnen bzw. Schließen der Formteile (4, 5) vorgesehen, zweckmäßig jedem Formteil (4 bzw. 5) ein solcher zugeordnet, und vorzugsweise ist der Linearantrieb im Sinne eines Öffnens entgegen der Belastungseinrichtung (13) betätigbar;
d) es ist eine Programmschaltung (19-33) vorgesehen, durch die erst das Schließen der Form (4, 5) und anschließend das Andrücken mittels der Druckglieder (27), gegebenfalls schließlich das Auslösen des Schweißstromes druchführbar ist.
e) die von den Formteilen (4,5) gebildete Aushöhlung (6) besitzt insgesamt eine 8 mm übersteigende Querschnittsstärke.

## Claims

1. A stud-welding process in which a stud (2) to be welded to a surface (1) is accelerated toward the surface (1) with a force (36) acting along its axis (A) while an arc is ignited, whereupon the end face of the stud is immersed in a melt bath formed by melting of the end face of the stud and the surface (1), characterized in that the stud (2) - at least before the acceleration process - is positioned relative to the surface (1) and pressed against the latter by means of at least two forces (36) which are essentially parallel to the stud axis (A), and preferably angularly symmetrical thereto, and act at two or more points outside the axis (A), so that the stud (2) does not float away laterally on immersion in the melt bath.

2. A process as claimed in claim 1, wherein the pressure (36) at two or more points is adjusted separately in each case.

3. A process a claimed in claim 1 or 2, wherein the tip ignition method is used.

4. A process as claimed in any of the preceding claims, wherein the stud used is the tang (2) of a trowel (1,2) to be produced, which tang is to be welded onto the trowel surface (1), and the tang (2) is preferably bent prior to welding.

5. A process as claimed in any of the preceding claims, wherein the stud (2), in particular having a shape differing from a straight shape, is held firmly in a mold (4,5) surrounding it.

6. A process as claimed in any of the preceding claims, wherein the bolt used is one having a cross-sectional thickness greater than 8 mm.

7. A process as claimed in any of the preceding claims, wherein, before or simultaneously with the application of pressure to the stud (2) with extra-axial force components (36) parallel to one another, axial pressure (37) is applied, and/or an axial pressure (37) in addition to the parallel force components (36) is exerted approximately at the instant of triggering of the welding current.

8. A device for carrying out the stud-welding process as claimed in any of the preceding claims, having a welding current source (33), from which current can be applied by means of a trigger switch (16 or 29) to a stud (2) to be welded onto a surface (1), and having a pressure-application device for generating a compressive force acting on the stud (2) prior to triggering of the welding current, wherein the pressure-application device has at least two pressure members (27) exerting a compressive force (36) parallel to one another, and preferably in addition a second pressure-application device which exerts the axial pressure (37), which pressure members (27) are connected to one another by means of a pressure plate (28) for axially loading the stud (2), and an adjusting device (V) is provided for adjusting the compressive force (36) of each pressure member (27).

9. A device as claimed in claim 8, wherein the acceleration member (30) is in the form of a magnetic hammer.

10. A device as claimed in claim 8 or 9, wherein at least one pressure member (27) is formed by a fluidic, in particular pneumatic, piston/cylinder unit (27) which can be connected to a pressure source (21) and the pressure source (21) preferably comprises a pressure tank, a pressure store or the like (21a).

11. A device as claimed in claim 8 or 9, wherein a mold (4,5) which consists of at least two parts, holds the stud (2) in a hollow (6) corresponding to said stud, is connected to at least one welding electrode (15) and is held exclusively on one of the pressure-application devices is provided as a holder for the stud (2), and at least one of the following features is realized:
a) a loading means (13) which exerts a predetermined force on the parts of the mold (4,5) in their closed position encompassing the stud (2) is provided and preferably has at least one spring, in particular at least one pressure spring (13), a pressure spring holder (14), in particular a pin-like one, expediently passing through the mold parts (4 or 5) and springs (13) being clamped between said mold parts and the end of particular spring holder;
b) at least two electrodes (15), each connected to a mold part (4,5), are provided;
c) at least one linear drive, in particular having a cylinder/piston unit (8), is provided for opening and closing the mold parts (4,5), expediently one such drive is coordinated with each mold part (4 or 5), and the linear drive can preferably be operated to effect opening in opposition to the loading means (13);
d) a program circuit (19-33) is provided, by means of which first closing of the mold (4,5) and then pressure application by means of the pressure members (27), and if necessary finally the triggering of the welding current, can be carried out;
e) the hollow (6) formed by the mold parts (4,5) has altogether a cross-sectional thickness exceeding 8 mm.

## Revendications

1. Procédé de soudage de goujons, dans lequel un goujon (2) à souder sur une surface (1) est accéléré en direction de la surface (1) avec une force agissant le long de son axe (A), tandis qu'un arc électrique est allumé, à la suite de quoi la surface frontale du goujon est plongée dans un bain en fusion, résultant de la fusion de la surface frontale du goujon et de la surface (1), caractérisé en ce que le goujon (2) est positionné par rapport à la surface (1) - au moins avant le processus d'accélération - par l'intermédiaire d'au moins deux forces (36), sensiblement parallèles à l'axe (A) et orientées, de préférence, suivant une symétrie angulaire par rapport à cet axe, en agissant en au moins deux points, situés hors de l'axe (A), le goujon (2) étant pressé sur cette surface (1) , de sorte qu'il ne s'écarte pas latéralement en flottant, lorsqu'il plonge dans le bain en fusion.

2. Procédé selon la revendication 1, caractérisé en ce que l'intensité de chacune des forces (36) agissant en les au moins deux endroits est réglée séparément.

3. Procédé selon la revendication 1 ou 2, caractérisé en ce que l'on utilise le procédé d'amorçage par pointe.

4. Procédé selon l'une des revendications précédentes, caractérisé en ce que l'on utilise comme goujon la soie (2) d'une truelle (1, 2) à fabriquer, soie devant être soudée sur la surface de truelle (1), et en ce que, de préférence, la soie (2) reçoit sa courbure avant le soudage.

5. Procédé selon l'une des revendications précédentes, caractérisé en ce que le goujon (2), formé en particulier, avec une forme autre que rectiligne, est maintenu dans une forme (4, 5) l'entourant.

6. Procédé selon l'une des revendications précédentes, caractérisé en ce qu'on utilise, comme goujon, un goujon à section transversale de largeur supérieure à 8 mm.

7. Procédé selon l'une des revendications précédentes, caractérisé en ce que, avant ou simultanément au pressage du goujon (2), par l'intermédiaire des forces (36) excentrées, parallèles l'une à l'autre, une pression axiale (37) est appliquée et/ou en ce qu'une pression axiale (37), s'ajoutant aux forces (36) parallèles, est exercée à peu près au moment du déclenchement du courant de soudage.

8. Dispositif pour la mise en oeuvre du procédé de soudage de goujons selon l'une des revendications précédentes, avec une source de courant de soudage (33), depuis laquelle le courant peut être appliqué, par l'intermédiaire d'un interrupteur de déclenchement (16, respectivement 29), à un goujon (2) à souder sur une surface (1), ainsi qu'avec un dispositif de pressage, pour produire une force de pression agissant sur le goujon (2), avant déclenchement du courant de soudage, et avec un organe d'accélération (30), provoquant l'accélération du goujon (2) en direction de la surface (1) , au moment du déclenchement du courant de soudage, caractérisé en ce que le dispositif de pressage comprend au moins deux organes de pressage (27) parallèles entre eux, exerçant une force de pressage (36), organes de pressage (27) reliés, par l'intermédiaire d'une plaque de pressage (28), pour charger le goujon (2), et en ce qu'un dispositif d'ajustement (V) est prévu pour régler la force de pressage (36) de chaque organe de pressage (27).

9. Dispositif selon la revendication 8, caractérisé en ce que l'organe d'accélération (30) est réalisé sous forme de marteau magnétique.

10. Dispositif selon la revendication 8 ou 9, caractérisé en ce qu'au moins un organe de pressage (27) est constitué d'un groupe à piston et cylindre (27) hydraulique, en particulier pneumatique, pouvant être relié à une source de pression (21), et en ce que, de préférence, la source de pression (21) comprend un réservoir à pression, un accumulateur à pression (21a), ou analogue.

11. Dispositif selon l'une des revendications 8 à 10, caractérisé en ce qu'est prévu, comme fixation pour le goujon (2), un moule (4, 5), réalisé en au moins deux parties, enchâssant le goujon (2) à l'aide d'une cavité (6) lui correspondant, relié à au moins une électrode de soudage (15), fixé exclusivement à l'un des dispositifs de pressage, et en ce qu'au moins l'une des caractéristiques suivantes est réalisée :
a) il est prévu un dispositif de chargement (13) sollicitant les parties du moule (4, 5), avec une force prédéterminée, dans sa position de fermeture enchâssant le goujon (2), dispositif présentant, de préférence, au moins un ressort, en particulier un ressort de pression (13), un support de ressort de pression (14), en particulier en forme de broche, passant, de manière appropriée, à travers les parties de moule (4, respectivement 5) , et des ressorts (13) étant respectivement enserrés entre celles-ci et son extrémité respective;
b) il est prévu au moins deux électrodes (15), reliées respectivement à une partie de moule (4, 5);
c) il est prévu, au moins, un entraînement linéaire, en particulier avec un groupe à piston et cylindre (8), pour ouvrir, respectivement fermer, les parties de moule (4, 5) et un tel entraînement linéaire étant associé, de manière appropriée, à chaque partie de moule (4, respectivement 5), et, de préférence, l'entraînement linéaire pouvant être actionné dans le sens d'une ouverture, à l'encontre de l'action du dispositif de chargement (13);
d) il est prévu un circuit de programmation (19 à 33), au moyen duquel peut ensuite être effectuée la fermeture du moule (4, 5), puis le pressage, au moyen des organes de pressage (27), le cas échéant enfin le déclenchement du courant de soudage.
e) la cavité, constituée par les parties de poule (4, 5) à une section transversale dont l'épaisseur globale dépasse 8 mm.
